# FASCICULE DE BREVET EUROPEEN

(11) **EP 3 625 879 B1**
(45) Date de publication et mention de la délivrance du brevet: **30.03.2022**
(21) Numéro de dépôt: 18719600.1
(22) Date de dépôt: 02.05.2018
(51) Int. Cl.: H02K 7/00, H02K 1/27

(54) **MACHINE ÉLECTRIQUE COMPRENANT UN ARBRE DE ROTOR MOLETÉ ET PROCÉDÉ DE FABRICATION D'UNE TELLE MACHINE**
ELEKTRISCHE MASCHINE MIT GERÄNDELTER ROTORWELLE UND VERFAHREN ZUR HERSTELLUNG SOLCH EINER MASCHINE
ELECTRIC MACHINE COMPRISING A KNURLED ROTOR SHAFT AND METHOD FOR MANUFACTURING SUCH A MACHINE

(30) Priorité: 16.05.2017 FR 1754280
(43) Date de publication de la demande: 25.03.2020
(73) Titulaire: Mavel EDT S.p.A., 11026 Pont-Saint-Martin (AO) (IT)
(72) Inventeur: FAVRE, Luca, 11010 Valpelline (AO) (IT); BETTONI, Davide, Settimo Vittone (TO) (IT); DIB, Wissam, 92150 Suresnes (FR)
(74) Mandataire: Leoncini, Alberto
(86) Numéro de dépôt international: PCT/EP2018/061154
(87) Numéro de publication internationale: WO 2018/210561

(56) Documents cités:
- WO-A2-2013/072892
- DE-A1-102005 059 018
- JP-A- 2004 336 965

## Description

La présente invention se rapporte à une machine électrique et à un procédé pour fabriquer cette machine électrique.

Elle concerne plus particulièrement une machine électrique synchro-réluctance assistés par des aimantes.

Généralement, une machine électrique comporte une partie fixe (stator) et une partie rotative (rotor) disposées coaxialement l'une dans l'autre.

Le rotor est formé d'un corps de rotor avec un empilage de tôles placé sur un arbre de rotor. Ces tôles comprennent des logements pour des aimants permanents et des perforations pour créer de barrières de flux permettant de diriger radialement le flux magnétique des aimants vers le stator.

Ce rotor est généralement logé à l'intérieur d'un stator qui porte des bobinages électriques permettant de générer un champ magnétique permettant d'entrainer en rotation le rotor.

Afin de fixer l'arbre du rotor et l'empilage de tôles formant le corps du rotor, l'arbre du rotor est classiquement inséré (emmanché) sous effort (par exemple au moyen d'une presse) dans le corps du rotor. Pour cela, le diamètre externe de l'arbre du rotor est supérieur au diamètre interne du corps du rotor. Afin de permettre une transmission de couple élevé, et une importante vitesse de rotation, la différence entre ces deux diamètres doit être importante. Toutefois, ce montage sous effort et cette différence de diamètre imposent des fortes contraintes mécaniques dans les tôles formant le corps du rotor, ce qui peut générer des déformations importantes de ces tôles, en particulier au niveau des ponts magnétiques, ce qui peut modifier le comportement de la machine électrique. En effet, les ponts magnétiques et les barrières de flux peuvent être déformés.

Pour pallier ces inconvénients, la présente invention concerne une machine électrique comprenant un rotor et un stator, le rotor étant formé par assemblage d'un corps de rotor et d'un arbre de rotor. Selon l'invention, l'arbre du rotor est moleté et le diamètre extérieur de l'arbre de rotor est supérieur au diamètre intérieur du corps de rotor d'une valeur comprise entre 0.05 mm et 0.3 mm et les les crêtes formées par le moletage dudit arbre de rotor sont rectifiées et présentent un sommet aplati correspondant au diamètre extérieur de l'arbre de rotor.

La présente invention concerne en outre un procédé de fabrication d'une telle machine électrique. Le moletage de l'arbre de rotor permet une bonne adhérence entre l'arbre de rotor et le corps de rotor, ce qui permet de réduire la différence entre les diamètres de l'arbre de rotor et du corps de rotor. Ainsi, les contraintes au sein des tôles formant le corps de rotor sont réduites.

Les documents DE 10 2005 059018 A et JP 2004-336965 A décrivent des arbres avec moletage fixé dans un corps de rotor. Le document WO 2013 072892 A décrit un arbre comprenant un cannelure pour fixer le corps de rotor. Mais aucun document décrit une rectification après le moletage pour adapter le diamètre extérieur dudit arbre au diamètre intérieur du corps de rotor.

### Le dispositif et le procédé selon l'invention

L'invention concerne une machine électrique comprenant un rotor et un stator, ledit rotor étant formé d'un corps de rotor avec un empilage de tôles, ledit corps de rotor étant fixé sur un arbre de rotor. Ledit arbre de rotor est moleté sur au moins une longueur destinée à coopérer avec ledit corps du rotor, et en ce que le diamètre extérieur dudit arbre de rotor est supérieur au diamètre intérieur dudit corps de rotor d'une valeur comprise entre 0.05 mm et 0.3 mm et les crêtes formées par le moletage dudit arbre de rotor sont rectifiées et présentent un sommet aplati correspondant au diamètre extérieur de l'arbre de rotor.

Selon un mode de réalisation, ledit arbre de rotor est moleté au moyen d'un moletage droit.

Conformément à une mise en oeuvre, lesdites tôles sont des tôles sensiblement circulaires comportant des orifices et/ou des aimants.

De préférence, lesdites tôles sont empilées et fixées ensemble pour former ledit corps du rotor.

Selon une caractéristique, ladite machine électrique est une machine synchrone à reluctance variable.

Conformément à une option de réalisation, le diamètre intérieur dudit corps de rotor (4) est lisse.

En outre, l'invention concerne un procédé de fabrication d'une machine électrique comprenant un rotor et un stator. Pour ce procédé, on réalise les étapes suivantes :
a) on empile des tôles pour former un corps de rotor ;
b) on réalise un moletage d'un arbre du rotor sur au moins une longueur destinée à coopérer avec ledit corps du rotor, le diamètre extérieur dudit arbre de rotor est supérieur au diamètre intérieur dudit corps de rotor d'une valeur comprise entre 0.05 mm et 0.3 mm ;
c) on forme ledit rotor par emmanchement dudit arbre de rotor dans ledit corps de rotor ; et
d) on positionne ledit rotor dans ledit stator; et
e) on rectifie la surface moleté dudit arbre du rotor pour réaliser un sommet aplati correspondant au diamètre extérieur de l'arbre de rotor.

Selon un mode de réalisation de l'invention, on réalise un moletage droit dudit arbre de rotor.

De préférence, on peut emmancher ledit arbre de rotor dans ledit corps de rotor au moyen d'une presse.

De plus, ledit procédé peut comporter une étape préalable d'insertion d'au moins un aimant sur au moins une desdites tôles.

### Présentation succincte des figures

D'autres caractéristiques et avantages du procédé selon l'invention, apparaîtront à la lecture de la description ci-après d'exemples non limitatifs de réalisations, en se référant aux figures annexées et décrites ci-après.
La figure 1 illustre un arbre de rotor selon un mode de réalisation de l'invention.
La figure 2 illustre une portion d'arbre de rotor moleté selon un mode de réalisation de l'invention.
La figure 3 illustre une portion d'arbre de rotor moleté et rectifié selon un mode de réalisation de l'invention.
La figure 4 illustre une portion du corps de rotor selon un mode de réalisation de l'invention.
La figure 5 illustre une portion de l'assemblage de l'arbre de rotor et du corps de rotor selon un mode de réalisation de l'invention.

### Description détaillée de l'invention

La présente invention concerne une machine électrique comprenant un rotor et un stator. Le rotor est formé d'un corps de rotor, lui-même formé d'un empilage de tôles. Le rotor comporte également un arbre de rotor qui est monté et fixé avec le corps du rotor, l'arbre de rotor étant inséré dans un alésage central du corps de rotor.

Selon l'invention, l'arbre de rotor est moleté sur au moins une longueur destinée à coopérer avec le corps du rotor. Le moletage est une opération qui consiste à réaliser des stries sur une surface. Le moletage permet d'augmenter l'adhérence de la pièce. Le moletage peut être obtenu par des molettes amenées au contact de l'arbre de rotor, ou par roulage contraint entre deux rouleaux ou deux crémaillères. En outre, le diamètre extérieur de l'arbre de rotor est supérieur au diamètre intérieur du corps de rotor d'une valeur comprise entre 0.05 mm et 0.3 mm, de préférence entre 0.1 mm et 0.15 mm. Cette conception du rotor permet une fixation optimale de l'arbre de rotor avec le corps de rotor pour transmettre des couples importants à des vitesses élevées. Grâce à la meilleure adhérence obtenue par le moletage et à la différence des diamètres réduite, les contraintes mécaniques au sein des tôles formant le corps de rotor sont réduites.

Afin de contrôler l'interférence par pression du corps de rotor et de l'arbre de rotor, les crêtes (les sommets) formées par le moletage sont rectifiées. Après la rectification, les crêtes ont un sommet aplati. La rectification permet de respecter des tolérances très serrées, ce qui assure des dimensions adaptées à la transmission de couple.

Selon un mode de réalisation de l'invention, le moletage de l'arbre de rotor peut être un moletage droit. Un moletage droit est un moletage comprenant des stries uniquement dans la direction axiale de l'arbre. Ainsi, il est possible d'optimiser l'adhérence et a fortiori la transmission de couple entre l'arbre du rotor et le corps de rotor. Toutefois, d'autres stries peuvent être formées sur l'arbre du rotor, par exemple des stries inclinées ou croisées.

Conformément à une réalisation de l'invention, la profondeur du moletage, c'est-à-dire la différence de hauteur entre les creux et les crêtes du moletage est comprise entre 0.1 et 0.2 mm, et peut valoir sensiblement 0.15 mm. Cette gamme de valeur permet d'optimiser l'adhérence tout en limitant la déformation des tôles formant le corps du rotor.

Conformément à une mise en oeuvre de l'invention, le diamètre intérieur du corps de rotor peut être lisse avant l'introduction de l'arbre du rotor, en d'autres termes, le diamètre intérieur du corps de rotor n'est pas moleté. En effet, la coopération du moletage de l'arbre du rotor avec l'alésage lisse du corps de rotor permet une adhérence suffisante pour transmettre le couple nécessaire. Toutefois, une fois l'arbre de rotor fixé dans le corps du rotor, le moletage de l'arbre du rotor et la différence des diamètres créent une déformation de l'alésage du corps de rotor, en formant des stries parallèles aux stries du moletage de l'arbre de rotor.

Conformément à une option de réalisation, les tôles formant le corps de rotor peuvent être des tôles sensiblement circulaires comportant des orifices et/ou des aimants permanents. Ainsi, ces tôles comprennent des logements pour des aimants permanents et des perforations pour créer de barrières de flux permettant de diriger radialement le flux magnétique des aimants vers le stator. Le stator comporte classiquement au moins une bobine générant un flux magnétique. Ces flux magnétiques génèrent la rotation du rotor.

Selon un mode de réalisation de l'invention, et comme cela est connu, les tôles formant le corps de rotor peuvent être assemblées les unes aux autres en faisant correspondre les alésages et les évidements par tous moyens connus, comme le collage, le pressage, etc.

Selon une caractéristique de l'invention, l'arbre de rotor peut être en acier.

Avantageusement, la machine électrique peut être du type machine synchrone à reluctance variable.

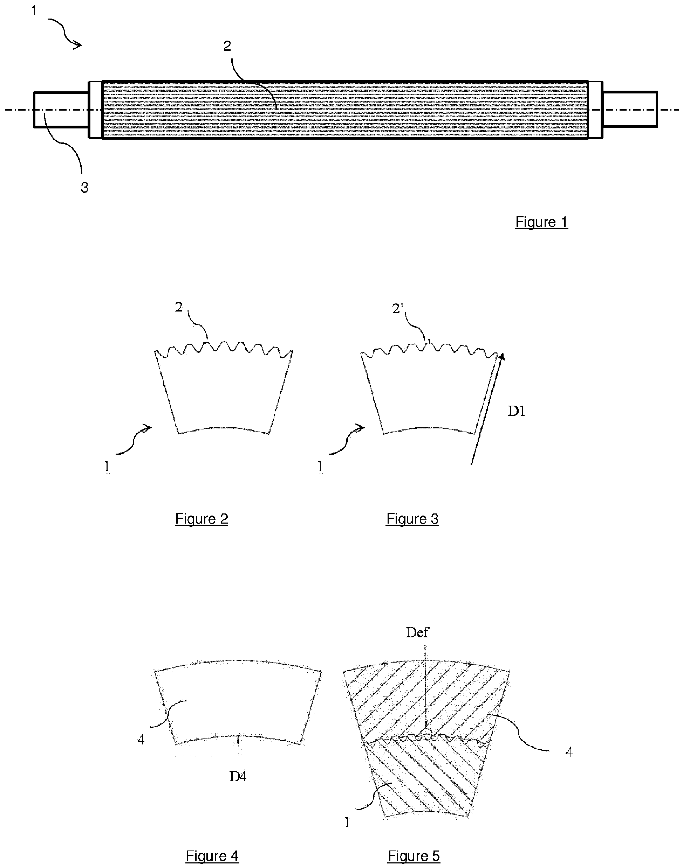

La figure 1 illustre, schématiquement et de manière non limitative, un arbre de rotor 1 selon un mode de réalisation de l'invention. L'arbre de rotor 1 comporte une partie moletée 2, réalisée de préférence par déformation de la matière constitutive de l'arbre. Pour l'exemple de la figure 1, les stries du moletage 2 sont parallèles à la direction axiale de l'arbre du rotor (il s'agit d'un moletage droit). De manière classique, l'arbre du rotor comporte à ses extrémités 3 des moyens pour la réalisation de plusieurs fonctions : transmission du couple, mise en place d'éléments de guidage, etc.
La figure 2 illustre, schématiquement et de manière non limitative, une portion d'arbre de rotor 1 comprenant un moletage droit 2. La figure 2 est une vue en coupe de l'arbre de rotor 1.
La figure 3 illustre, schématiquement et de manière non limitative, une portion d'arbre de rotor 1 comprenant un moletage 2' ayant été rectifié. La figure 3 est une vue en coupe de l'arbre de rotor 1. L'arbre de rotor 1 illustré sur cette figure correspond à l'arbre de rotor 1 de la figure 2 après une opération de rectification du moletage : les crêtes formées par le moletage ont été rectifiées, elles présentent un sommet aplati. Sur cette figure est également représenté le diamètre D1, qui est le diamètre extérieur de l'arbre de rotor 1, correspondant au diamètre des crêtes du moletage 2'.
La figure 4 illustre, schématiquement et de manière non limitative, une portion de corps de rotor 4, prévu pour coopérer avec l'arbre de rotor 1 illustré aux figures 2 et 3. La figure 4 est une vue en coupe du corps de rotor. Sur cette figure est représentée le diamètre D4, qui est le diamètre intérieur du corps de rotor 4. L'alésage du corps de rotor est lisse (c'est-à-dire non moleté). Selon l'invention et afin de permettre l'adhérence et la transmission du couple, le diamètre D1 est supérieur au diamètre D4. De plus, la différence entre les diamètres D1 et D4 est comprise entre 0.05 mm et 0.3 mm.
La figure 5 illustre, schématiquement et de manière non limitative, l'assemblage de l'arbre de rotor 1 de la figure 3 avec le corps de rotor 4 de la figure 4. La figure 5 est une vue en coupe du corps de rotor et de l'arbre de rotor. Le diamètre D1 étant supérieur au diamètre D4 et en raison de la présence du moletage, une déformation locale Def se forme dans le corps de rotor 4 au niveau de son diamètre intérieur.

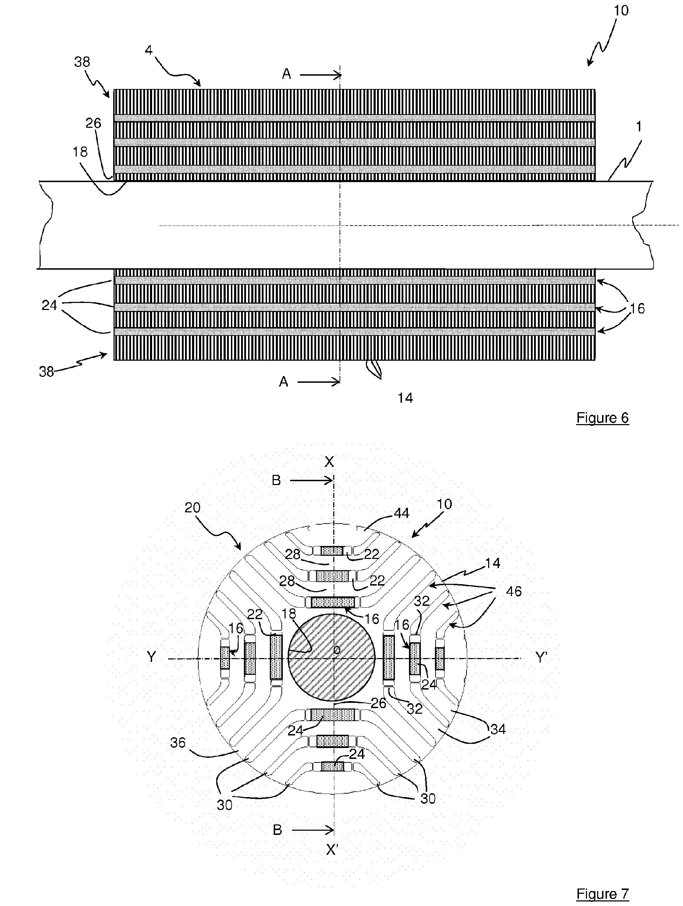

Les figures 6 et 7 illustrent, schématiquement et de manière non limitative, une machine électrique tournante qui comporte un stator (non représenté) et un rotor 10. La figure 6 est une vue en coupe selon l'axe BB (représenté en figure 7), et la figure 7 est une vue en coupe selon l'axe AA (représenté en figure 6).

Comme illustré sur la figure 6, ce rotor comporte, un arbre moleté 1 (le moletage n'est pas représenté), de préférence magnétique, sur lequel est placé un empilage de tôles ferromagnétiques planes identiques 14 portant une pluralité de générateurs de flux magnétiques 16.

En se rapportant à la figure 7, les tôles 14 de forme circulaire comprennent un alésage central 18 traversé par l'arbre de rotor 1 et une pluralité d'évidements axiaux qui traversent les tôles 14 de part en part.

Comme cela est connu, les tôles sont assemblées les unes aux autres en faisant correspondre les alésages et les évidements par tous moyens connus, comme le collage, le pressage, etc.

Ainsi assemblées, les tôles forment le corps 4 du rotor 10 qui porte l'arbre 1 par les alésages centraux 18.

Cette configuration est plus particulièrement appliquée à une machine électrique à reluctance variable comme cela sera mieux décrit ci-après.

Dans cette configuration, le corps comprend une première série d'évidements axiaux qui loge des générateurs de flux magnétiques et une autre série d'évidements axiaux qui permet de créer des barrières de flux magnétiques.

La première série d'évidements 22 est ici (de manière non limitative) en forme de quadrilatère, ici rectangle. Ces évidements 22 reçoivent les générateurs de flux magnétiques, ici des aimants permanents 24 sous forme de barreau également rectangulaire de longueur sensiblement égale à la longueur du corps. Ces évidements sont appelés dans la suite de la description "logements".

Ces logements 22 sont disposés radialement les uns au-dessus des autres et à distance les uns des autres à partir du centre O de l'alésage 18.

Comme mieux visible sur la figure 7, ces logements rectangulaires 22 sont répartis selon des axes XX' et YY' sensiblement orthogonaux et passant par le centre O.

Dans l'exemple de la figure 7, chaque demi-axe (OX, OX' ; OY, OY') portent trois logements axiaux 22 dont les faces de plus grande longueur sont perpendiculaires aux demi-axes et dont les dimensions de ces faces vont en diminuant du centre O vers la périphérie de l'empilage de tôles. De même, la hauteur de ces logements va en se réduisant du centre O vers cette périphérie.

Le logement 22 le plus proche de l'alésage 18 laisse subsister un pont de matière 26 avec cet alésage et un pont de matière 28 demeure entre chaque logement.

Le logement 22 le plus loin de l'alésage 18 est placé à distance du bord périphérique du corps.

L'autre série d'évidements consiste en des perforations 30, de hauteur sensiblement constante et de direction radiale inclinée, qui partent de ces logements pour arriver au voisinage du bord des tôles.

Ces perforations partent du bord latéral 32 des logements 22 et s'élèvent, selon un angle par rapport à une droite parallèle aux logements 22, pour arriver à ce voisinage.

Tel que cela est représenté sur la figure 6, les perforations inclinées sont disposées symétriquement par rapport aux logements. Plus précisément, une série de trois perforations inclinées est placée d'un côté du demi-axe et un autre série de trois perforations inclinées est placée de l'autre côté de ce même demi-axe.

Ainsi, il se forme à chaque fois une figure géométrique sensiblement en forme de V à fond aplati avec le fond plat formé par le logement 22 et avec les bras inclinés de ce V formés par les perforations 30. On obtient alors, sur chaque demi-axes, trois formes en V superposées et à distance les unes des autres et de dimensions en hauteur et en largeur qui diminuent de l'alésage vers la périphérie du corps.

Ainsi, outre les ponts de matière 26, 28, il subsiste une partie pleine 34 entre les perforations inclinées de chaque forme en V et une autre partie pleine 36 entre la perforation la plus proche de l'alésage d'une série de trois formes en V et la perforation la plus proche de l'alésage d'une autre série voisine de formes en V.

Par cela, il se crée des barrières de flux 46 formées par les perforations. Le flux magnétique provenant des aimants ne peut alors que transiter par les ponts de matière et les parties pleines.

En outre, la présente invention concerne un procédé de fabrication d'une machine électrique. La machine électrique comporte un rotor et un stator. Le procédé selon l'invention comprend les étapes suivantes :
a) on empile, et de préférence on fixe, des tôles pour former un corps de rotor ;
b) on réalise un moletage d'un arbre de rotor sur au moins une longueur destinée à coopérer avec le corps de rotor, le diamètre extérieur de l'arbre de rotor est supérieur au diamètre intérieur du corps de rotor d'une valeur comprise entre 0.05 mm et 0.3 mm ;
c) on forme le rotor par emmanchement du arbre de rotor dans le corps de rotor ; et
d) on positionne le rotor dans le stator.

Les étapes a) et b) peuvent être réalisées dans cet ordre, simultanément ou en ordre inverse.

Le procédé de fabrication peut être prévu pour fabriquer la machine électrique selon l'un des modes de réalisation tels que décrits précédemment.

Les tôles utilisées pour l'étape a) du procédé peuvent être similaires à la tôle illustrée en figure 7. La tôle peut être notamment prévue pour recevoir un aimant permanent. Dans ce cas, le procédé peut comporter une étape préalable (avant l'empilement des tôles) d'insertion d'au moins un aimant permanent sur au moins une des tôles.

L'arbre de rotor obtenu après l'étape b) peut être similaire à l'arbre de rotor illustré aux figures 1 à 3.

L'étape c) peut permettre d'aboutir à une réalisation telle qu'illustrées aux figures 5 et 6.

Avantageusement, on réalise un moletage de l'arbre de rotor par déformation de la matière constituant l'arbre de rotor. Par exemple, on peut réaliser le moletage par des molettes amenées au contact de l'arbre de rotor, ou par roulage contraint entre deux rouleaux ou deux crémaillères.

Selon un mode de réalisation de l'invention, on peut réaliser un moletage droit de l'arbre de rotor. Ainsi, il est possible d'optimiser l'adhérence et a fortiori la transmission de couple entre l'arbre du rotor et le corps de rotor. Toutefois, d'autres stries peuvent être formées sur l'arbre du rotor, par exemple des stries inclinées ou croisées.

Conformément à une mise en oeuvre de l'invention, on réalise une étape de rectification de la surface moletée de l'arbre de rotor. Ainsi, les crêtes (les sommets) formées par le moletage sont rectifiées. La rectification permet de respecter des tolérances très serrées, ce qui assure des dimensions adaptées à la transmission de couple.

Afin d'assurer la fixation de l'arbre de rotor avec le corps de rotor, l'emmanchement peut être mise en oeuvre au moyen d'une presse. L'effort appliqué par la presse peut être déterminé notamment en fonction des diamètres de l'arbre de rotor et du corps de rotor.

## Revendications

1. Machine électrique comprenant un rotor (10) et un stator, ledit rotor (10) étant formé d'un corps de rotor (4) avec un empilage de tôles (14), ledit corps de rotor (4) étant fixé sur un arbre de rotor (1), ledit arbre de rotor (1) est moleté (2') sur au moins une longueur destinée à coopérer avec ledit corps du rotor (4), le diamètre extérieur (D1) dudit arbre de rotor (1) est supérieur au diamètre intérieur (D4) dudit corps de rotor (4), **caractérisé en ce que** la différence est d'une valeur comprise entre 0,05 mm et 0,3 mm, dans laquelle les crêtes formées par le moletage (2') dudit arbre de rotor (1) sont rectifiées et présentent un sommet aplati correspondant au diamètre extérieur (D1) de l'arbre de rotor (1)

2. Machine selon la revendication 1, dans laquelle ledit arbre de rotor (1) est moleté (2, 2') au moyen d'un moletage droit.

3. Machine selon l'une des revendications précédentes, dans laquelle lesdites tôles (14) sont des tôles sensiblement circulaires comportant des orifices (22 ; 30) et/ou des aimants (24).

4. Machine selon l'une des revendications précédentes, dans laquelle lesdites tôles (14) sont empilées et fixées ensemble pour former ledit corps du rotor (4).

5. Machine selon l'une des revendications précédentes, dans laquelle ladite machine électrique est une machine synchrone à reluctance variable.

6. Machine selon l'une des revendications précédentes, dans laquelle le diamètre intérieur (D4) dudit corps de rotor (4) est lisse.

7. Procédé de fabrication d'une machine électrique comprenant un rotor (10) et un stator réalisé par les étapes suivantes :
a) on empile des tôles (14) pour former un corps de rotor (4) ;
b) on réalise un moletage (2') d'un arbre de rotor (1) sur au moins une longueur destinée à coopérer avec ledit corps du rotor (4), le diamètre extérieur (D1) dudit arbre de rotor (1) est supérieur au diamètre intérieur (D4) dudit corps de rotor (4) d'une valeur comprise entre 0.05 mm et 0.3 mm ;
c) on forme ledit rotor (10) par emmanchement dudit arbre de rotor (1) dans ledit corps de rotor (4) ;
d) on positionne ledit rotor (10) dans ledit stator; et
e) on rectifie la surface moletée (2') dudit arbre du rotor (1) pour réaliser un sommet aplati correspondant au diamètre extérieur (D1) dudit arbre de rotor (1).

8. Procédé selon la revendications 7, dans lequel on réalise un moletage (2') droit dudit arbre de rotor (1).

9. Procédé selon l'une des revendications 7 ou 8, dans lequel on emmanche ledit arbre de rotor (1) dans ledit corps de rotor (4) au moyen d'une presse.

10. Procédé selon l'une des revendications 7 à 9 , dans lequel ledit procédé comporte une étape préalable d'insertion d'au moins un aimant (24) sur au moins une desdites tôles (14).

## Patentansprüche

1. Elektrische Maschine mit einem Rotor (10) und einem Stator, wobei der Rotor (10) durch einen Rotorkörper (4) mit einem Blechpaket (14) gebildet ist, wobei der Rotorkörper (4) auf einer Rotorwelle (1) befestigt ist, wobei die Rotorwelle (1) auf mindestens einem Abschnitt gerändelt (2') ist, der dazu bestimmt ist, mit dem Rotorkörper (4) zusammenzuwirken, wobei der Außendurchmesser (D1) der Rotorwelle (1) größer als der Innendurchmesser ist Durchmesser (D4) des Rotorkörpers (4), **dadurch gekennzeichnet, dass** die Differenz einen Wert zwischen 0,05 mm und 0,3 mm hat, in dem die durch die Rändelung (2') der Rotorwelle (1) gebildeten Kämme liegen geschliffen und haben eine flache Oberseite, die dem Außendurchmesser (D1) der Rotorwelle (1) entspricht.

2. Maschine nach Anspruch 1, wobei die Rotorwelle (1) durch gerades Rändeln (2, 2') gerändelt ist.

3. Maschine nach einem der vorhergehenden Ansprüche, bei der die Lamellen (14) im Wesentlichen kreisförmige Lamellen sind, die Öffnungen (22; 30) und/oder Permanentmagnete (24) umfassen.

4. Maschine nach einem der vorhergehenden Ansprüche, bei der die Bleche (14) gestapelt und aneinander befestigt sind, um den Rotorkörper (4) zu bilden.

5. Maschine nach einem der vorhergehenden Ansprüche, bei der die elektrische Maschine eine Synchronmaschine mit variabler Reluktanz ist.

6. Maschine nach einem der vorhergehenden Ansprüche, bei der der Innendurchmesser (D4) des Rotorkörpers (4) glatt ist.

7. Herstellungsprozess einer elektrischen Maschine mit einem Rotor (10) und einem Stator, hergestellt durch die folgenden Schritte:
a) Stapeln der Bleche (14), um einen Rotorkörper (4) zu bilden;
b) Rändeln (2') einer Rotorwelle (1) für mindestens einen Abschnitt, der dazu bestimmt ist, mit dem Rotorkörper (4) zusammenzuwirken, wobei der Außendurchmesser (D1) der Rotorwelle (1) größer als der Innendurchmesser (D4) ist ) des Rotorkörpers (4) mit einem Wert zwischen 0,05 mm und 0,3 mm;
c) Bilden des Rotors (10) durch Einpassen der Rotorwelle (1) in den Rotorkörper (4);
d) Positionieren des Rotors (10) in dem Stator; und
e) Schleifen der gerändelten Oberfläche (2') der Rotorwelle (1), um eine flache Oberseite zu erzeugen, die dem Außendurchmesser (D1) der Rotorwelle (1) entspricht.

8. Verfahren nach Anspruch 7, bei dem eine gerade Rändelung (2') der Rotorwelle (1) hergestellt wird.

9. Verfahren nach Anspruch 7 oder 8, bei dem die Rotorwelle (1) mittels einer Presse in den Rotorkörper (4) eingesetzt wird.

10. Verfahren nach einem der Ansprüche 7 bis 9, wobei das Verfahren einen vorbereitenden Schritt des Einsetzens mindestens eines Magneten (24) auf mindestens eine der Lamellen (14) umfasst.

## Claims

1. Electric machine comprising a rotor (10) and a stator, said rotor (10) being formed by a rotor body (4) with a pack of laminations (14), said rotor body (4) being fixed on a shaft of rotor (1), said rotor shaft (1) being knurled (2') on at least a portion intended to cooperate with said rotor body (4), the external diameter (D1) of said rotor shaft (1) being greater than the internal diameter (D4) of said rotor body (4), **characterized in that** the difference is of a value between 0.05 mm and 0.3 mm, in which the crests formed by the knurling (2') of said rotor shaft (1) are ground and have a flat top corresponding to the external diameter (D1) of the rotor shaft (1).

2. Machine according to claim 1, wherein said rotor shaft (1) is knurled (2, 2') by straight knurling.

3. Machine according to one of the preceding claims, wherein said laminations (14) are substantially circular laminations comprising orifices (22; 30) and/or permanent magnets (24).

4. Machine according to one of the preceding claims, wherein said laminations (14) are stacked and fixed together to form said rotor body (4).

5. Machine according to one of the preceding claims, wherein said electric machine is a synchronous machine with variable reluctance.

6. Machine according to one of the preceding claims, wherein the internal diameter (D4) of said rotor body (4) is smooth.

7. Manufacturing process of an electric machine comprising a rotor (10) and a stator made through the following steps:
a) stacking the laminations (14) to form a rotor body (4);
b) knurling (2') a rotor shaft (1) for at least a portion intended to cooperate with said rotor body (4), the external diameter (D1) of said rotor shaft (1) is greater than the internal diameter (D4) of said rotor body (4) of a value comprised between 0.05 mm and 0.3 mm;
c) forming said rotor (10) by fitting said rotor shaft (1) into said rotor body (4);
d) positioning said rotor (10) in said stator; and
e) grinding the knurled surface (2') of said rotor shaft (1) to create a flat top corresponding to the external diameter (D1) of the rotor shaft (1).

8. Process according to claim 7, in which a straight knurling (2') of said rotor shaft (1) is made.

9. Process according to claim 7 or 8, in which said rotor shaft (1) is inserted into said rotor body (4) by means of a press.

10. Process according to one of claims 7 to 9, wherein said process comprises a preliminary step of inserting at least one magnet (24) on at least one of said laminations (14).
